# EUROPÄISCHE PATENTSCHRIFT

(11) **EP 3 556 207 B1**
(45) Veröffentlichungstag und Bekanntmachung des Hinweises auf die Patenterteilung: **01.05.2024**
(21) Anmeldenummer: 19165395.5
(22) Anmeldetag: 27.03.2019
(51) Int. Cl.: A01K 97/02

(54) **LOCKSTOFFSPENDER**
BAIT DISPENSER
DISTRIBUTEUR DE L'ATTRACTANT

(30) Priorität: 16.04.2018 DE 102018108913
(43) Veröffentlichungstag der Anmeldung: 23.10.2019
(73) Patentinhaber: Börner, Thorsten, 44532 Lünen (DE)
(72) Erfinder: Börner, Thorsten, 44532 Lünen (DE)
(74) Vertreter: Meinke, Jochen

(56) Entgegenhaltungen:
- JP-U- H 065 473
- US-A- 4 138 794
- US-A1- 2004 068 916

## Beschreibung

Die vorliegende Erfindung betrifft einen Lockstoffspender zum Angeln und Fischen.

Die Verwendung von Lockstoffen zum Ködern von Fischen ist bereits bekannt. Es sind bereits verschiedene Arten von Ködern bekannt, bei denen Duftlockstoffe eingesetzt werden. Aus dem Patent EP 101 04 257 A1 geht ein Köder hervor, bei welchem die Duftlockstoffe direkt bei der Herstellung des Köders in den Kunststoff des Körpers eingebracht werden und diese nach und nach in das Wasser abgegeben werden. Diese Art des Köders hat den Nachteil, dass der Köder nach der vollständigen Abgabe des Duftstoffes unbrauchbar wird. Außerdem ist ein Gewichtselement für Fischereizwecke bekannt, welches ebenfalls eine gewisse Köderfunktion aufgrund von Duftlockstoffen besitzt. Dieses Gewichtselement hat einen durchströmbaren Hohlraum, in welchem sich ein saugfähiges Material zur Aufnahme eines Lockstoffes befindet. Das Gewichtselement weist einen Gewichtskörper aus Blei auf. Durch die Durchströmung des beschriebenen Hohlraumes mit Wasser wird der Lockstoff freigegeben. Durch das hohe Gewicht des Bleis sinkt dieser Gewichtskörper im Wasser ab und es wird nur das Grundangeln ermöglicht, jedoch keine andere Art des Fischens. US 4 138 794 A offenbart einen Lockstoffspender gemäß dem Oberbegriff des Anspruchs 1. US 2004/068916 A1 offenbart einen Lockstoffspender, der aus einem Zylinder, einem Schlitten und einem saugfähigen Material gebildet ist.

Die vorliegende Erfindung verfolgt die Aufgabe einen eigenständigen Lockstoffspender anzugeben, welcher für alle gängigen Arten des Angelns geeignet ist und durch die restliche Montage nicht beeinflusst wird.

Diese Aufgabe wird mit einem Lockstoffspender nach Anspruch 1 gelöst. Weitere vorteilhafte Ausgestaltungen der Erfindung sind in den abhängigen Ansprüchen angegeben. Erfindungsgemäß besteht der Lockstoffspender aus einem Zylinder, einem Schlitten und einem saugfähigen Material. Der Zylinder des Lockstoffspenders ist vorzugsweise aus Kunststoff gebildet. Erfindungsgemäß weist der Zylinder am unteren Ende ein Gewichtselement zur Stabilisierung auf. Die Wahl eines leichten Materials für den Zylinder hat den Vorteil, dass der Lockstoffspender anders als das beschriebene Gewichtselement für Fischereizwecke nicht auf dem Grund des Wassers liegt und somit verschiedene Arten des Angelns möglich sind. Weiterhin besitzt der Zylinder am oberen Ende eine Öse zur Montage an einem Abstandshalter vor dem Vorfach. Diese Art der Montage hat den Vorteil, dass der Lockstoffspender unabhängig von anderen Teilen der Angel ist und sich auch nicht mit diesen verwirren kann. Außenrandseitig weist der Zylinder Bohrungen auf, durch die der Innenraum des Zylinders mit Wasser durchströmt werden kann. Diese Bohrungen haben den Vorteil, dass das saugfähige Material, welches sich im Innenraum des Zylinders befindet, insbesondere mit einer Spritze mit Lockstoff befüllbar ist. Das saugfähige Material zeichnet sich dadurch aus, dass es ein Schwamm ist. Je nach verwendetem Schwammmaterial kann die Aufnahme- und Austrittsgeschwindigkeit des Lockstoffs beeinflusst werden. Dies hat den Vorteil, dass der Lockstoffspender vielseitig einsetzbar ist und ganz dem Vorhaben des Anglers angepasst werden kann. Der Schwamm ist mit der Unterseite des Zylinders und der Oberseite des Schlittens verklebt. Diese Verklebung hat den Vorteil, dass der Lockstoffspender beim Auswerfen keinen Lockstoff durch die Löcher verlieren kann, da durch sie ein Zusammendrücken des Schwamms durch die Fliehkraft nicht möglich ist.

Der Zylinder des Lockstoffspenders ist an der Oberseite nicht geschlossen und am unteren Ende mit einem zentralen Loch versehen, in welchem der Schlitten sitzt. Der Schlitten des Lockstoffspenders besteht aus einem Hohlstift, insbesondere Röhrchen mit einer kegelförmigen Abdeckung am oberen Ende aus dem der Hohlstift leicht herausragt. Auf dem Hohlstift des Schlittens liegt eine Feder. Rund um diese Feder befindet sich der Schwamm zur Lockstoffaufnahme. Am unteren Ende des Röhrchens befindet sich eine Kugel. Zieht man an dieser, so zieht man den Hohlstift und damit den gesamten Schlitten nach unten. Dadurch wird der Schwamm zusammengedrückt. Lässt man die Kugel wieder los, so dehnt sich auch der Schwamm wieder aus und nimmt seine Ausgangsposition wieder ein.

Die Ausbildung des Schlittens als Federpumpe hat zum Vorteil, dass durch diese Mechanik der Lockstoffspender durch das Zusammendrücken des Schwamms im Wasser restlos gereinigt werden kann. Ein weiterer Vorteil dieser Mechanik ist die Möglichkeit, die Lockstoffe durch leichtes Zusammendrücken des Schwammes effektiv zu verteilen, zu verdünnen oder miteinander zu Vermischen.

Der Schlitten ist in weiterer, vorteilhafter Ausgestaltung als Federpumpe ausgebildet. Dies erlaubt ein effektives Verteilen des Lockstoffes im Schwamm sowie die Reinigung nach dem Fischen.

Der Schlitten kann als Hohlstift, insbesondere Röhrchen, mit einer kegelförmigen Abdeckung am oberen Ende, aus dem der Hohlstift leicht herausragt, ausgebildet sein. Der Zylinder ist an der Oberseite offen und an der Unterseite mit einer zentralen Bohrung versehen, in der der Schlitten sitzt. Am unteren Ende des Röhrchens ist eine Kugel angeordnet, zieht man damit den Hohlstift nach unten und damit den gesamten Schlitten, quetscht die obere Abdeckung am Hohlstift den Schwamm bei der Abwärtsbewegung zusammen. Lässt man die Kugel wieder los, so drückt die Feder, ähnlich wie bei einem Kugelschreiber, den Schlitten wieder auseinander und somit auch den Schwamm zurück in seine Ausgangsposition, da der Schwamm mit der Abdeckung verklebt ist. Die Feder liegt auf dem Hohlstift und der Schwamm ist rund um die Feder angeordnet.

Durch den erfindungsgemäßen Lockstoffspender ist es möglich, die gesamte Mechanik und den Schwamm einfach und restlos im Wasser zu reinigen, sauber auszuquetschen und auszuwringen, damit dieser möglichst trocken wird.

Durch ein leichtes Quetschen des Schwammes beim Befüllen lässt sich der Lockstoff effektiv verteilen, verdünnen oder auch mischen.

Beim Auswerfen, das heißt beim Ins-Wasser-Werfen des Köders, verliert der Lockstoffspender keinen Lockstoff durch die seitlichen Bohrungen. Da der innere Schwamm fest am Schlitten verklebt ist, kann die Fliehkraft diesem beim Auswerfen nicht zusammendrücken, sodass kein Lockstoff verloren geht.

Durch die Montage des Lockstoffspenders an einem Abstandshalter vor dem Vorfach kann sich der Lockstoffspender weder beim Auswerfen der Angel, noch bei starker Strömung im Wasser mit der Hauptschnur verheddern. Außerdem kann je nach eingesetztem Schwammmaterial die Aufnahmefähigkeit und Austrittsgeschwindigkeit des Lockstoffs beeinflusst und variiert werden.

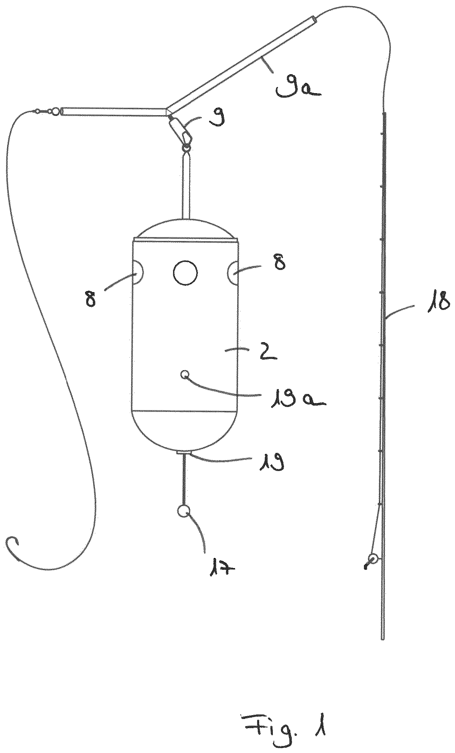

Die Erfindung ist nachstehend anhand der Zeichnungen beispielhaft näher erläutert. Diese zeigen in
- Fig. 1: eine Außenansicht eines erfindungsgemäßen Lockstoffspenders,

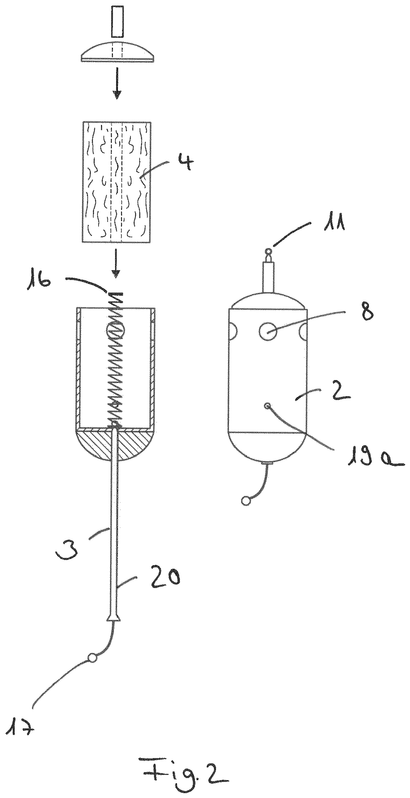

- Fig. 2: einen Querschnitt durch einen erfindungsgemäßen Lockstoffspender,

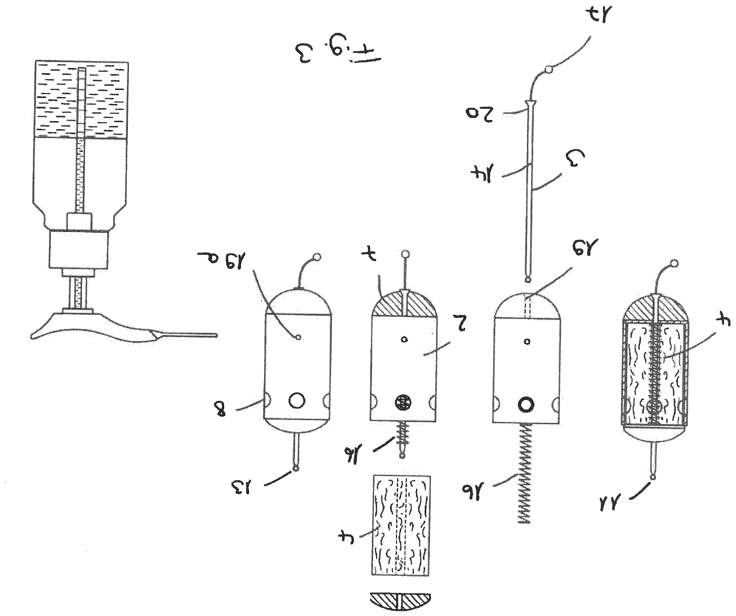

- Fig. 3: eine Explosionszeichnung eines erfindungsgemäßen Lockstoffspenders.

Ein allgemein mit 1 bezeichneter Lockstoffspender besteht aus einem Zylinder 2, einem Schlitten 3 und einem saugfähigen Material 4 und weist am unteren Ende ein Gewichtselement 7 auf. Am oberen Ende des Zylinders 2 befindet sich eine Öse 11 zur Montage an einem Abstandhalter 9 vor dem Vorfach 9a, das sich an der Angel 18 befindet.

Außenrandseitig ist der Zylinder 2 mit Bohrungen 8 versehen, durch die der Innenraum des Zylinders 2 mit Wasser durchströmt werden kann.

Der Schwamm 4 ist mit der Unterseite des Zylinders 2 und der Oberseite des Schlittens 3 verklebt. Damit kann der Lockstoffspender 1 beim Auswerfen keinen Lockstoff durch die Löcher 19a verlieren, da durch sie ein Zusammendrücken des Schwamms 4 durch die Fliehkraft nicht möglich ist.

Am unteren Ende des Zylinders 2 ist ein zentrales Loch 19 versehen, in dem der Schlitten 3 sitzt.

Der Schlitten 3 des Lockstoffspenders 1 besteht aus einem Hohlstift 14, insbesondere einem Röhrchen 20 mit einer kegelförmigen Abdeckung 13, die am oberen Ende aus dem Hohlstift 14 leicht herausragt. Auf dem Hohlstift 14 des Schlittens 3 liegt eine Feder 16. Rund um diese Feder 16 befindet sich der Schwamm 4 zur Lockstoffaufnahme. Am unteren Ende des Röhrchens 20 befindet sich eine Kugel 17. Zieht man an dieser, so zieht man den Hohlstift 14 und damit den gesamten Schlitten 3 nach unten. Dadurch wird der Schwamm 4 zusammengedrückt. Lässt man die Kugel 17 wieder los, so dehnt sich auch der Schwamm 4 wieder aus und nimmt seine Ausgangsposition wieder ein.

Natürlich ist die Erfindung nicht auf die dargestellten Ausführungsbeispiele beschränkt. Weitere Ausgestaltungen sind möglich, ohne den Rahmen der beigefügten Ansprüche zu verlassen.

### Bezugszeichenliste:

- 1: Lockstoffspender
- 2: Zylinder
- 3: Schlitten
- 4: Schwamm
- 5: Oberseite
- 6: Boden
- 7: Gewichtselement
- 8: Bohrungen
- 9: Abstandshalter
- 9a: Vorfach
- 10: Oberes Ende
- 11: Öse
- 12: Federpumpe
- 13: kegelförmige Abdeckung
- 14: Hohlstift
- 15: zentrale Bohrung
- 16: Feder
- 17: Kugel
- 18: Angel
- 19: Loch
- 19a: Löcher
- 20: Röhrchen

## Patentansprüche

1. Lockstoffspender (1) zum Angeln und Fischen,
wobei dieser aus einem Zylinder (2), einem Schlitten (3) und einem saugfähigen Material (4) gebildet ist,
wobei der Zylinder (2) am Boden ein Gewichtselement (7) aufweist, **dadurch gekennzeichnet, dass** das saugfähige Material (4) fest mit der Oberseite des Schlittens (3) und dem Boden des Zylinders (2) verklebt ist, und dass der Zylinder (2) an der Oberseite offen und am Boden mit einer zentralen Bohrung (15) versehen ist, in der der Schlitten (3) sitzt.

2. Lockstoffspender nach Anspruch 1,
**dadurch gekennzeichnet,**
**dass** das saugfähige Material (4) ein Schwamm ist.

3. Lockstoffspender nach Anspruch 1 oder 2,
**dadurch gekennzeichnet,**
**dass** der Zylinder (2) aus Kunststoff gebildet ist.

4. Lockstoffspender nach einem oder mehreren Ansprüchen 1 bis 3,
**dadurch gekennzeichnet,**
**dass** der Zylinder (2) außenrandseitige Bohrungen (8) aufweist,

5. Lockstoffspender nach einem oder mehreren Ansprüchen 1 bis 4,
**dadurch gekennzeichnet,**
**dass** der Zylinder (2) am oberen Ende (10) eine Öse (11) zur Montage an einem Abstandshalter (9) vor einem Vorfach (9a) aufweist.

6. Lockstoffspender nach einem oder mehreren Ansprüchen 1 bis 5,
**dadurch gekennzeichnet,**
**dass** der Schwamm (4) insbesondere mit einer Spritze über die außenrandseitigen Bohrungen (8) im Zylinder (2) mit Lockstoff befüllbar ist.

7. Lockstoffspender nach einem oder mehreren Ansprüchen 1 bis 6,
**dadurch gekennzeichnet,**
**dass** der Schlitten (3) als Federpumpe (12) ausgebildet ist.

8. Lockstoffspender nach einem oder mehreren Ansprüchen 1 bis 7,
**dadurch gekennzeichnet,**
**dass** der Schlitten (3) als Hohlstift (14), insbesondere Röhrchen, mit einer kegelförmigen Abdeckung (13) am oberen Ende, aus dem der Hohlstift (14) leicht herausragt, ausgebildet ist.

9. Lockstoffspender nach einem oder mehreren Ansprüchen 1 bis 8,
**dadurch gekennzeichnet,**
**dass** die Feder (16) auf dem Hohlstift (14) liegt und sich der Schwamm (4) zur Lockstoffaufnahme rund um die Feder (16) befindet.

## Claims

1. Bait dispenser (1) for angling and fishing,
wherein this is formed by a cylinder (2), a slide (3) and an absorbent material (4),
wherein the cylinder (2) has a weight element (7) at the bottom, **characterized in that** the absorbent material (4) is securely adhered to the top side of the slide (3) and the bottom of the cylinder (2), and **in that** the cylinder (2) is open at the top side and provided with a central hole (15) at the bottom, in which the slide (3) is placed.

2. Bait dispenser according to claim 1,
**characterized in that**
the absorbent material (4) is a sponge.

3. Bait dispenser according to claim 1 or 2,
**characterized in that**
the cylinder (2) is made of plastic.

4. Bait dispenser according to one or more of claims 1 to 3,
**characterized in that**
the cylinder (2) has holes (8) around the outer edge.

5. Bait dispenser according to one or more of claims 1 to 4,
**characterized in that**
the cylinder (2) has an eyelet (11) at the top end (10) for mounting on a spacer (9) in front of a trace (9a).

6. Bait dispenser according to one or more of claims 1 to 5,
**characterized in that**
the sponge (4) can be filled with bait, in particular by a syringe, via the holes (8) in the cylinder (2) around the outer edge.

7. Bait dispenser according to one or more of claims 1 to 6,
**characterized in that**
the slide (3) is configured as a spring pump (12).

8. Bait dispenser according to one or more of claims 1 to 7,
**characterized in that**
the slide (3) is configured as a hollow pin (14), in particular a tube, with a cone-shaped cover (13) at the top end, from which the hollow pin (14) protrudes slightly.

9. Bait dispenser according to one or more of claims 1 to 8,
**characterized in that**
the spring (16) lies on the hollow pin (14) and the sponge (4) for holding the bait is positioned around the spring (16).

## Revendications

1. Distributeur d'attractant (1) pour la pêche et pour la pêche au filet,
dans lequel celui-ci est formé par un cylindre (2), un coulisseau (3) et un matériau absorbant (4),
dans lequel le cylindre (2) présente sur le fond un élément massique (7), **caractérisé en ce que** le matériau absorbant (4) est fixement collé au côté supérieur du coulisseau (3) et au fond du cylindre (2), et **en ce que** le cylindre (2) est ouvert au niveau du côté supérieur et est pourvu au niveau du fond d'un perçage central (15), dans lequel le coulisseau (3) est placé.

2. Distributeur d'attractant selon la revendication 1,
**caractérisé en ce que**
le matériau absorbant (4) est une éponge.

3. Distributeur d'attractant selon la revendication 1 ou 2,
**caractérisé en ce que**
le cylindre (2) est formé en matière plastique.

4. Distributeur d'attractant selon l'une ou plusieurs quelconques revendications 1 à 3,
**caractérisé en ce que**
le cylindre (2) présente des perçages (8) autour du bord extérieur.

5. Distributeur d'attractant selon l'une ou plusieurs quelconques revendications 1 à 4,
**caractérisé en ce que**
le cylindre (2) présente au niveau de l'extrémité supérieure (10) un oeillet (11) pour le montage au niveau d'un écarteur (9) à l'avant d'un bas de ligne (9a).

6. Distributeur d'attractant selon l'une ou plusieurs quelconques revendications 1 à 5,
**caractérisé en ce que**
l'éponge (4) peut être remplie avec de l'attractant, en particulier avec une seringue, par le biais des perçages (8) dans le cylindre (2) autour du bord extérieur.

7. Distributeur d'attractant selon l'une ou plusieurs quelconques revendications 1 à 6,
**caractérisé en ce que**
le coulisseau (3) est réalisé comme pompe à ressort (12).

8. Distributeur d'attractant selon l'une ou plusieurs quelconques revendications 1 à 7,
**caractérisé en ce que**
le coulisseau (3) est réalisé comme tige creuse (14), en particulier un tube, avec un recouvrement (13) conique au niveau de l'extrémité supérieure, de laquelle la tige creuse (14) fait légèrement saillie.

9. Distributeur d'attractant selon l'une ou plusieurs quelconques revendications 1 à 8,
**caractérisé en ce que**
le ressort (16) se situe sur la tige creuse (14) et l'éponge (4) se trouve tout autour du ressort (16) pour recevoir l'attractant.
